(19) **Europäisches Patentamt / European Patent Office / Office européen des brevets**

(11) **EP 4 541 556 A1**

(12) **EUROPEAN PATENT APPLICATION**
published in accordance with Art. 153(4) EPC

(43) Date of publication:
**23.04.2025 Bulletin 2025/17**

(21) Application number: **23823958.6**

(22) Date of filing: **14.06.2023**

(51) International Patent Classification (IPC):
**B29C 55/18** (2006.01)     **C08J 5/18** (2006.01)
**B29C 43/46** (2006.01)     **B29C 43/52** (2006.01)
**B29C 43/58** (2006.01)     **B29C 48/305** (2019.01)
**B29C 48/88** (2019.01)     **B29C 48/92** (2019.01)

(52) Cooperative Patent Classification (CPC):
**B29C 43/46; B29C 43/52; B29C 43/58;**
**B29C 48/305; B29C 48/88; B29C 48/92;**
**B29C 55/18; C08J 5/18**

(86) International application number:
**PCT/JP2023/022125**

(87) International publication number:
**WO 2023/243668 (21.12.2023 Gazette 2023/51)**

(84) Designated Contracting States:
**AL AT BE BG CH CY CZ DE DK EE ES FI FR GB**
**GR HR HU IE IS IT LI LT LU MC ME MK MT NL**
**NO PL PT RO RS SE SI SK SM TR**
Designated Extension States:
**BA**
Designated Validation States:
**KH MA MD TN**

(30) Priority: **15.06.2022 JP 2022096354**

(71) Applicants:
• **Sunallomer Ltd**
  **Tokyo, 140-0002 (JP)**
• **Kotsugisya Co., Ltd.**
  **Higashihiroshima-shi, Hiroshima 739-2106 (JP)**

(72) Inventors:
• **MARUYAMA, Masanori**
  **Kawasaki-shi, Kanagawa 210-0863 (JP)**

• **IKEDA, Masayuki**
  **Kawasaki-shi, Kanagawa 210-0863 (JP)**
• **MIZUTANI, Yoko**
  **Kawasaki-shi, Kanagawa 210-0863 (JP)**
• **KAJIOKA, Hiroshi**
  **Kawasaki-shi, Kanagawa 210-0863 (JP)**
• **SAKAI, Kazuhiko**
  **Kawasaki-shi, Kanagawa 210-0863 (JP)**
• **TAGASHIRA, Katsuharu**
  **Kawasaki-shi, Kanagawa 210-0863 (JP)**
• **OKADA, Kiyoka**
  **Higashihiroshima-shi, Hiroshima 739-2106 (JP)**
• **HIKOSAKA, Masamichi**
  **Higashihiroshima-shi, Hiroshima 739-2106 (JP)**

(74) Representative: **Eisenführ Speiser**
**Patentanwälte Rechtsanwälte PartGmbB**
**Gollierstraße 4**
**80339 München (DE)**

(54) **METHOD FOR PRODUCING CRYSTALLINE RESIN SHEET**

(57)     This method for producing a crystalline resin sheet includes press-rolling a sheet-shaped molten crystalline resin composition between a pair of pinch rolls. The crystalline resin composition includes a crystalline resin and a soluble nucleating agent. When the radius of the pair of pinch rolls is denoted by R, the average thickness of the sheet after press-rolling is denoted by L, and the sheet take-up speed in the pair of pinch rolls is denoted by V, an adjustment is performed so as to control the average elongational strain rate $\varepsilon$ (R, L, V) in the sheet elongation direction represented by a specific formula to be more than 30 s$^{-1}$ but no more than 80 s$^{-1}$.

EP 4 541 556 A1

# FIG. 1

extruder

lip gap

melt

2R

ε

guide roll

through view

ND

MD

TD

end view

V

L

edge view

**Description**

Technical Field

The present invention relates to a method for producing a crystalline resin sheet. The present application claims priority based on Japanese Patent Application No. 2022-096354 filed in Japan on June 15, 2022, the contents of which are incorporated herein by reference.

Background Art

Conventionally, there has been disclosed a technique in which when a melt of a crystalline resin such as polypropylene is press-rolled to form a sheet (including a film having a thickness of about 0.1 mm), the elongational strain rate is adjusted to align the orientations of polymer chains in the melt to improve crystallinity (for example, Patent Literature 1 to 4, and Non Patent Literature 1 and 2).

Patent Literature 2 discloses a method for achieving industrial-scale production of a sheet containing a high ratio of nanometer-sized oriented crystals, that is, nano-oriented crystals (NOCs), by setting the elongational strain rate to a critical value or more.

Since the sheet containing NOCs is excellent in mechanical strength, heat resistance, transparency, and the like, it is expected to be utilized as a substitute for engineering plastics.

Citation List

Patent Literature

Patent Literature 1: Japanese Patent No. 5339350
Patent Literature 2: Japanese Patent No. 5534458
Patent Literature 3: Japanese Patent No. 5765707
Patent Literature 4: Japanese Patent No. 5995201

Non Patent Literature

Non Patent Literature 1: K. Okada et al., Polym. J., 42, 464-473 (2010)
Non Patent Literature 2: K. Okada et al., Polym. J., 50, 167-176 (2018)

Summary of Invention

Technical Problem

In order to orient and crystallize polymers in a melt of a crystalline resin which contains no impurity and has a simplified composition, the conventional research and development on NOCs has adopted a policy of adjusting the temperature of the resin to be subjected to press-rolling, the radius of the pinch rolls, the sheet thickness after press-rolling and elongation, and the sheet take-up speed. As a result, for example, a sheet which has an orientation function $f_c$ indicating the orientation degree of the polymer chains in crystals including NOCs and a crystallinity $\chi_c$ exceeding 0.9, and is excellent in mechanical properties such as tensile modulus and in transparency can be produced according to the condition concerning the elongational strain rate disclosed in Patent Literature 2.

Incidentally, the conventional elongational strain rate at which a sheet having ultimately excellent characteristics as described above is obtained is about several hundreds of $s^{-1}$. It is desirable that a sheet having excellent properties to some extent can be obtained even when the elongational strain rate is lowered to about several tens of $s^{-1}$, since the production conditions concerning the elongational strain rate can be loosened or broadened.

Therefore, the present invention provides a method for producing a crystalline resin sheet containing NOCs and having high mechanical properties and high transparency while reducing the elongational strain rate as compared with the conventional rate.

Solution to Problem

The present invention has the following aspects.

[1] A method for producing a crystalline resin sheet, the method including: press-rolling a sheet-shaped molten crystalline resin composition by sandwiching the crystalline resin composition between a pair of pinch rolls, wherein

the crystalline resin composition contains a crystalline resin and a soluble nucleating agent, and
when a radius of the pair of pinch rolls is denoted by R, an average thickness of a sheet after press-rolling is denoted by L, and a sheet take-up speed in the pair of pinch rolls is denoted by V,
an adjustment is performed so as to control an average elongational strain rate $\varepsilon$ (R, L, V) in a sheet elongation direction represented by formula (1) below to be more than 30 s$^{-1}$ but no more than 80 s$^{-1}$.

[Mathematical formula 1]

$$\varepsilon(R,L,V) = \frac{V}{\sqrt{RL}} \qquad \dots \text{Formula (1)}$$

[2] The method for producing a crystalline resin sheet according to [1], wherein the sheet-shaped molten crystalline resin composition is obtained by discharging the crystalline resin composition from a die having a slit-shaped opening.
[3] The method for producing a crystalline resin sheet according to [1] or [2], wherein the sheet after press-rolling is peeled off from the pinch rolls, and a gas is injected toward a portion where the sheet after press-rolling is separated from the pinch rolls.
[4] The method for producing a crystalline resin sheet according to any one of [1] to [3], wherein a peripheral surface of at least one of the pair of pinch rolls is subjected to a mold-release treatment in advance.
[5] The method for producing a crystalline resin sheet according to any one of [1] to [4], wherein when a temperature of the crystalline resin composition just before press-rolling is denoted by $T_e$, a temperature of the pair of pinch rolls is denoted by $T_r$, a crystallization temperature of the crystalline resin composition measured by DSC is denoted by $T_c$, and a melting point is denoted by $T_m$, a value range of $(T_e-T_m)$ is set to -15°C to 130°C and a value range of $(T_c-T_r)$ is set to -10°C to 130°C by adjustment of the temperature $T_e$ and the temperature $T_r$.
[6] The method for producing a crystalline resin sheet according to any one of [1] to [5], wherein when a temperature of the crystalline resin composition just before press-rolling is denoted by $T_e$, a temperature of the pair of pinch rolls is denoted by $T_r$, a crystallization temperature of the crystalline resin composition measured by DSC is denoted by $T_c$, and a melting point is denoted by $T_m$, a value range of $(T_e-T_m)$ is set to 0°C to 90°C and a value range of $(T_c-T_r)$ is set to 0°C to 110°C by adjustment of the temperature $T_e$ and the temperature $T_r$.

Advantageous Effects of Invention

According to the production method of the present invention, since the crystalline resin composition to be subjected to press-rolling contains a soluble nucleating agent, it is possible to produce a crystalline resin sheet which contains more complete NOCs to be described later and has high mechanical properties and high transparency even at a lower elongational strain rate than in the conventional cases.

Brief Description of Drawings

Fig. 1 is a schematic view showing a state in which a sheet-shaped molten crystalline resin composition is press-rolled with a pair of pinch rolls.
Fig. 2 shows polarized microscopic images (through, edge, and end views) of a sample piece of Example 2.
Fig. 3 shows SAXS patterns (through, edge, and end views) of the sample piece of Example 2.
Fig. 4 shows WAXD patterns (through, edge, and end views) of the sample piece of Example 2.

Description of Embodiments

A first aspect of the present invention is a method for producing a crystalline resin sheet, in which a sheet-shaped molten crystalline resin composition is sandwiched between a pair of pinch rolls and press-rolled.

In the present specification, "sheet" is a term of a concept including "film". In general, a material having a thickness of about 0.1 mm and a material having a thickness of 0.15 mm or more are sometimes distinguished from each other by referring them as a film and a sheet, respectively, but in the present specification, they are not distinguished from each other by such terms unless otherwise specified.

A sheet forming apparatus used in the production method of the present aspect is not particularly limited as long as it can supply a sheet-shaped melt of the crystalline resin composition to a pair of pinch rolls and press-roll the melt, and a known apparatus can be applied. For example, a continuously formable apparatus 10, a batch type forming apparatus 20, and the like schematically exemplified in Patent Literature 2 can be cited. At least one of the pair of pinch rolls is rotatable in the elongation direction of the sheet. The radii R of the pair of pinch rolls are equal to each other.

The sheet forming apparatus preferably includes a die that discharges the molten crystalline resin composition. The die preferably has a slit-shaped opening (discharge portion), because it facilitates the supply of the crystalline resin composition in the form of a sheet to the pair of pinch rolls. The width (lip gap) of the slit-shaped opening, that is, the thickness of the sheet-shaped crystalline resin composition supplied to the pair of pinch rolls is, for example, about 0.1 mm to 5 mm, preferably about 0.5 mm to 1.5 mm.

The temperature of the molten crystalline resin composition of the present aspect may be any temperature before press-rolling which allows for the supply in the form of a sheet to the pair of pinch rolls and the formation into a sheet by press-rolling, and may be the melting point of the crystalline resin measured by DSC or higher, or may be a temperature lower than the melting point of the crystalline resin measured by DSC (temperature at which the crystalline resin is in a supercooled state).

The temperature of the crystalline resin composition just before press-rolling by the pair of pinch rolls (after being discharged from a die and just before being press-rolled) is denoted by $T_e$, the temperature of the pair of pinch rolls is denoted by $T_r$, the crystallization temperature of the crystalline resin composition measured by DSC is denoted by $T_c$, and the melting point is denoted by $T_m$. At this time, it is preferable to set the range of the value of $(T_e-T_m)$ to -15°C to 130°C and the range of the value of $(T_c-T_r)$ to -10°C to 130°C, it is more preferable to set $(T_e-T_m) = $ -5°C to 110°C and $(T_c-T_r) = $ -5°C to 120°C, it is still more preferable to set $(T_e-T_m) = $ 0°C to 90°C and $(T_c-T_r) = $ 0°C to 110°C, it is particularly preferable to set $(T_e-T_m) = $ 10°C to 70°C and $(T_c-T_r) = $ 5°C to 110°C, and it is the most preferable to set $(T_e-T_m) = $ 20°C to 50°C and $(T_c-T_r) = $ 10°C to 110°C, by adjusting the temperature $T_e$ and the temperature $T_r$. When each temperature is in the above range, a crystalline resin sheet containing NOCs and having high mechanical properties and high transparency is more easily obtained.

The temperature $T_e$ of the crystalline resin composition is a value of the temperature of the resin composition after being discharged from a die and just before being press-rolled.

The temperature $T_r$ of the pair of pinch rolls is a value of a surface temperature of each pinch roll. The temperatures $T_r$ of the pair of pinch rolls are equal to each other.

$T_e$ and $T_r$ can be measured by any method, but it is preferable to measure $T_e$ and $T_r$ using a non-contact thermometer such as a radiation thermometer.

In the production method of the present aspect, in order to prevent the sheet of the crystalline resin composition after press-rolling from being wound around any one of the pair of pinch rolls, it is preferable that a gas is injected toward a portion where the sheet after press-rolling is separated from the pinch rolls when the sheet after press-rolling is peeled off from the pinch rolls to be fed to a subsequent stage. The injection speed is, for example, 50 to 200 m³/min.

In addition, it is preferable that the peripheral surface of at least one of the pair of pinch rolls is subjected to mold-release treatment in advance in order that the sheet after press-rolling is easily peeled off from the peripheral surface. Examples of the mold-release treatment include a method of coating or spraying a mold-release agent such as silicone or fluororesin to the peripheral surface.

The crystalline resin composition contains a crystalline resin and a soluble nucleating agent.

The crystalline resin is a thermoplastic resin that can be formed by elongation, and examples thereof include polyolefin (or polyalkylene), polyamide, polyester, polyether, liquid crystal polymer, fluororesin, vinyl resin, polyphenylene sulfide, polylactic acid, polyacetal, and polyether nitrile.

Examples of the polyolefin include polyethylene, isotactic polypropylene (iPP), syndiotactic polypropylene, poly(1-butene), poly(4-methylpentene), and a crystalline ethylene-propylene copolymer. The later-described isotactic fraction (mmmm) representing the stereoregularity of the iPP is preferably 93% or more, more preferably 97% or more.

Examples of the polyamide include nylon 6, nylon 66, and nylon 12; wholly aromatic polyamides, and the like.

Examples of the polyester include aliphatic aromatic polyesters such as polyethylene terephthalate, polybutylene terephthalate, and polyethylene naphthalate; wholly aromatic polyesters; and aliphatic polyesters such as polyethylene succinate and polybutylene succinate.

Examples of the polyether include polyether ether ketone.

Examples of the liquid crystal polymer include liquid crystal polyester.

Examples of the fluororesin include polytetrafluoroethylene and polyvinylidene fluoride.

Examples of the vinyl resin include syndiotactic polystyrene, isotactic polystyrene, polyvinyl alcohol, and polyvinyl chloride.

These crystalline resins may be used alone, or in combination of the same type and different molecular weights.

The soluble nucleating agent is not limited as long as the soluble nucleating agent is miscible with the crystalline resin in a molten state to form a melt in miscible, and is gelled before solidification of the crystalline resin to form a three-dimensional (3D) network structure, but is preferably selected from a nonitol-based nucleating agent, a xylitol-based nucleating agent, a sorbitol-based nucleating agent, and a triamide-based nucleating agent. Examples of the nucleating agent having a nonitol-based structure include 1,2,3-trideoxy-4,6:5,7-bis-[(4-propylphenyl)methylene]-nonitol, examples of the nucleating agent having a xylitol-based structure include bis-1,3:2,4-(5',6',7',8'-tetrahydro-2-naphthaldehyde benzylidene)1-allylxylitol, and bis-1,3:2,4-(3',4'-dimethylbenzylidene)1-propylxylitol, examples of the nucleating agent having a sorbitol-based structure include bis-1,3:2,4-(4'-ethylbenzylidene)1-allylsorbitol, bis-1,3:2,4-(3'-methyl-4'-fluoro-benzylidene)1-propylsorbitol, bis-1,3,2,4-(3',4'-dimethylbenzylidene)1'-methyl-2'-propenylsorbitol, bis-1,3,2,4-dibenzylidene 2',3'-dibromopropyl sorbitol, bis-1,3,2,4-dibenzylidene 2'-bromo-3'-hydroxypropyl sorbitol, bis-1,3:2,4-(3'-bromo-4'-ethylbenzylidene)-1-allyl sorbitol, mono 2,4-(3'-bromo-4'-ethylbenzylidene)-1-allyl sorbitol, bis-1,3:2,4-(4'-ethylbenzylidene)1-allyl sorbitol, bis-1,3:2,4-(3',4'-dimethylbenzylidene)1-methylsorbitol, bis(P-methylbenzylidene)sorbitol, and 1,3:2,4-bis-o-(4-methylbenzylidene)-D-sorbitol, and examples of nucleating agents having a triamide-based structure include 1,3,5-tris(2,2-dimethylpropanamido)benzene and 1,2,3-propanetricarboxylic acid N,N',N"-tris(2-methylcyclohexyl) amide.

Examples of the nonitol-based commercially available soluble nucleating agent to be used for the composition of the present invention include Millad NX8000 (manufactured by Milliken & Company), examples of the sorbitol-based commercially available soluble nucleating agent include RiKAFAST R-1 (manufactured by New Japan Chemical Co., Ltd.), Millad 3988 (manufactured by Milliken & Company), GEL ALL E-200 (manufactured by New Japan Chemical Co., Ltd.), and GEL ALL MD (manufactured by New Japan Chemical Co., Ltd.), and examples of the triamide-based commercially available soluble nucleating agent include IRGACLEAR XT386 (manufactured by BASF) and RIKACLEAR PC1 (manufactured by New Japan Chemical Co., Ltd.). The soluble nucleating agent may be used alone or in combination of two or more kinds thereof. The reason why the addition of the soluble-type transparent nucleating agent significantly facilitates the crystalline resin to generate NOCs is considered to be that, in the process in which the nucleating agent self-assembles the 3D network during the elongation of the melt in miscible, heterogeneous nucleation of polymer chains of the crystalline resin occurs epitaxially in the 3D network of the nucleating agent, and the 3D network is efficiently elongated in the machine direction (MD), thereby suppressing entropic relaxation of polymer chains of the crystalline resin before nucleation and growth. However, this hypothesis is not limiting.

The content of the soluble nucleating agent with respect to the total mass of the crystalline resin composition is preferably 0.01 to 5 mass%, more preferably 0.1 to 2 mass%, and still more preferably 0.2 to 1 mass%. Within the above range, the effect of the present invention is further obtained. The effect reaches a plateau above the upper limit value of the above range, which is not preferable from the viewpoint of economic efficiency.

The crystalline resin composition of the present invention may contain, as an optional component, a synthetic resin or synthetic rubber other than the above-described crystalline resin, and an additive other than the above-described soluble nucleating agent as long as the effect of the present invention is not impaired. These optional components may be used alone or in combination of two or more kinds thereof. The content may be a known amount.

Examples of the additive other than the above-described soluble nucleating agent, which may be contained in the crystalline resin composition of the present invention, include inorganic fillers, antioxidants, neutralizers, nucleating agents other than the above-described soluble nucleating agent, weather-resistant agents, pigments (organic or inorganic), internal lubricants, external lubricants, antiblocking agents, antistatic agents, chlorine absorbers, heat stabilizers, light stabilizers, ultraviolet absorbers, slipping agents, antifogging agents, flame retardants, dispersants, copper inhibitors, plasticizers, foaming agents, antifoaming agents, crosslinking agents, peroxides, and oil extension.

These additives may be used alone or in combination of two or more kinds thereof. The content may be a known amount.

The sheet-shaped molten crystalline resin composition is obtained by mixing the crystalline resin, the soluble nucleating agent, and the optional component as necessary by a known method.

From the viewpoint of easily carrying out the production method of the present aspect, it is preferable that the crystalline resin composition does not contain any optional component and contains only the crystalline resin and the soluble nucleating agent.

A radius of the pinch rolls on which the sheet-shaped molten crystalline resin composition is press-rolled is denoted by R, an average thickness of the sheet after press-rolling is denoted by L, and a sheet take-up speed in the pinch rolls is denoted by V.

At this time, a desired crystalline resin sheet can be obtained by performing an adjustment so as to control the average elongational strain rate $\varepsilon$(R, L, V) in the sheet elongation direction represented by the formula (1) to be more than 30 s$^{-1}$ but no more than 80 s$^{-1}$. The average elongational strain rate $\varepsilon$ is preferably less than 80 s$^{-1}$.

The average elongational strain rate $\varepsilon$ of the present aspect is, for example, preferably 32 to 80 s$^{-1}$, more

preferably 35 to 80 s$^{-1}$, and still more preferably more than 37 s$^{-1}$ and less than 80 s$^{-1}$.

Within the above range, a crystalline resin sheet containing more complete NOCs described later can be more easily obtained.

Since the crystalline resin composition of the present aspect contains the soluble nucleating agent, NOCs can be contained in the crystalline resin sheet formed from the crystalline resin composition even when the average elongational strain rate ε is set to an order of several tens per second which is one digit lower than the conventional order of several hundreds per second.

Therefore, it is possible to lower the sheet take-up speed V defined as the numerator of the formula (1) than in the conventional cases, thereby achieving low-speed production. In addition, it is possible to produce the sheet by increasing the radius R of the pinch rolls, or by increasing the average thickness L of the sheet, which are defined in the square root of the denominator of the above formula (1).

Here, the average elongational strain rate ε represented by the above formula (1) is as derived for the condition that the pinch rolls are not deformed in Patent Literature 2 and the above-mentioned paper by Okada et al. (Non Patent Literature 2). In the sheet production method of Patent Literature 2, an average elongational strain rate ε at which optical characteristics derived from NOCs observed in a polymer sheet to be produced are completely changed (NOC content is rapidly increased) is particularly defined as a critical elongational strain rate ε*.

In the present aspect, it is sufficient that the crystalline resin sheet to be produced contains NOCs, and it is not an essential requirement that the crystalline resin sheet contains NOCs at such a high rate that the optical characteristics of the crystalline resin sheet are completely changed as described in Patent Literature 2. Whether or not the crystalline resin sheet contains NOCs can be easily determined by polarization microscopy observation or SAXS measurement based on a known determination criterion.

As shown in Examples and Comparative Example described later, according to the production method of the present aspect, a crystalline resin sheet containing NOCs is obtained even when the average elongational strain rate ε is reduced, and the critical elongational strain rate ε* in the production method of the present aspect is smaller than the critical elongational strain rate ε* in Patent Literature 2 and the above-mentioned paper by Okada et al. (Non Patent Literature 1).

In the above (1), the sheet take-up speed V can be set to, for example, 0.5 to 100 m/min, and is preferably 1.0 to 50 m/min, more preferably 2.0 to 30 m/min, and still more preferably 4.0 to 20 m/min. Here, the sheet take-up speed V is a value calculated from the moving speed of the roller surface caused by rotation.

In the formula (1), the radius R of the pair of pinch rolls can be set to, for example, 50 to 250 mm, and is preferably 70 to 200 mm, more preferably 80 to 180 mm, and still more preferably 90 to 180 mm. Here, the radius R of the pinch rolls is a value of 1/2 of the diameter of the pinch rolls measured using a steel tape measure.

In the formula (1), the average thickness L of the sheet after press-rolling can be, for example, 100 to 3000 μm, and is preferably 100 to 1500 μm, more preferably 100 to 1000 μm, and still more preferably 120 to 1000 μm. Here, the average thickness L of the sheet after press-rolling is a value measured by a known method such as a beta-ray film thickness meter.

With the suitable V, R, and L as described above, it is easy to perform an adjustment so as to control the average elongational strain rate ε(R, L, V) in the sheet elongation direction represented by the formula (1) to be more than 30 s$^{-1}$.

The crystalline resin sheet obtained by the production method of the present aspect preferably has the following physical properties.

The average thickness of the crystalline resin sheet is preferably 0.12 mm or more, more preferably 0.15 mm or more, still more preferably 0.3 mm or more. The mechanical properties can be enhanced with increasing thickness. The upper limit value of the thickness is not particularly limited, and is, for example, about 5 mm as a guideline.

The tensile modulus of the crystalline resin sheet in at least one of the machine direction (MD) and the transverse direction (TD) is preferably 2000 MPa or more, more preferably 2500 MPa or more, still more preferably 3000 MPa or more. The upper limit thereof is not particularly limited, and is, for example, about 5000 MPa as a guideline. Here, the tensile modulus is a value measured at room temperature of 23°C in accordance with JIS K7161-2.

The total haze and the internal haze of the crystalline resin sheet are preferably in the following ranges. The lower the haze, the higher the transparency.

The total haze is preferably 4% or less, more preferably 3.5% or less, still more preferably 3% or less, and particularly preferably 2.5% or less.

The internal haze is preferably 3% or less, more preferably 2.5% or less, still more preferably 2% or less, particularly preferably 1.5% or less.

Here, the internal haze is a haze measured in a state where liquid paraffin is applied to the sheet surface, and the total haze is a haze measured in a non-treated state without applying liquid paraffin to the sheet surface. Each haze is a value measured for a test piece having a sheet thickness of 400 μm in accordance with JIS K 7136.

Examples and Comparative Example will be described below, but the present invention is not limited to the following Examples.

Examples

[Example 1]

[Preparation of resin composition for press-rolling]

Isotactic polypropylene (iPP) (Mw = 32.6 $\times$ 10$^4$, Mw/Mn = 11.4, xylene-soluble content (XS) = 1.6 wt%, stereoregularity (pentad: mmmm) = 97.5%) manufactured by SunAllomer Ltd. was used as a resin material, and blended with 1.0 wt% of a soluble type transparent nucleating agent (nonitol-based Millad NX8000 manufactured by Milliken & Company), 0.24 wt% of an antioxidant (B225 manufactured by BASF) and 0.05 wt% of a neutralizing agent (calcium stearate manufactured by TANNAN KAGAKU KOGYO CO., LTD.), and the blend was melt-kneaded at 230°C using an extruder to obtain a resin composition S for press-rolling.

"Mw" of the resin material means a mass average molecular weight, and "Mn" means a number average molecular weight. As shown below, the number average molecular weight (Mn) and the weight average molecular weight (Mw) were measured, and the molecular weight distribution (Mw/Mn) was determined by dividing the mass average molecular weight (Mw) by the number average molecular weight (Mn). PL GPC220 manufactured by Polymer Laboratories was used as an apparatus, 1,2,4-trichlorobenzene containing an antioxidant was used as a mobile phase, UT-G (1), UT-807 (1), and UT-806M (2) manufactured by Showa Denko K.K. were connected in series and used as a column, and a differential refractometer was used as a detector. In addition, the same material as that used as the mobile phase was used as a solvent of the sample solution, and the sample was dissolved at a sample concentration of 1 mg/mL for 2 hours while being shaken at a temperature of 150°C to prepare a measurement sample. The sample solution thus obtained was poured into a column by an amount of 500 $\mu$L, and measurement was performed at a flow rate of 1.0 mL/min, a temperature of 145°C, and a data acquisition interval of 1 second. The column was calibrated using a polystyrene standard sample (Shodex STANDARD, manufactured by SHOWA DENKO K.K.) having a molecular weight of 580 to 7.45 million by cubic approximation. As the coefficients of Mark-Houwink-Sakurada, K = 1.21 $\times$ 10$^{-4}$ and $\alpha$ = 0.707 were used for the polystyrene standard sample, and K = 1.37 $\times$ 10$^{-4}$ and $\alpha$ = 0.75 were used for the propylene-based polymer.

The xylene-soluble content (XS) of the resin material was measured by a method according to ISO 16152; first edition; 2005-07-01.

In addition, the isotactic fraction (mmmm) in terms of pentad units of meso-methyl groups in molecular chains, which is an index of stereoregularity of the polypropylene polymer, was determined by a measurement of NMR (JNM-GSX400 ($^{13}$C nuclear resonance frequency: 100 MHz) manufactured by JEOL Ltd.).

NMR measurement conditions are as follows. Measurement mode: proton decoupling method, pulse width: 8.0 $\mu$s, pulse repetition time: 3.0 $\mu$s, accumulation number: 20,000 times, solvent: mixed solvent of 1,2,4-trichlorobenzene (75 volume%)/heavy benzene (25 volume%), internal standard: hexamethyldisiloxane sample concentration: 300 mg/3.0 ml solvent, measurement temperature: 120°C

Each signal was assigned based on the description of Macromolecules, 13, 267, 1980 by A. Zambelli et al..

The crystallization temperature (Tc) of the crystalline resin to be press-rolled with the pinch rolls and the melting point (Tm) of the crystalline resin were measured by DSC. As to the measurement conditions, the following measurement apparatus, sample mass, and measurement temperature pattern were employed.

Measurement apparatus: Diamond DSC manufactured by PerkinElmer Inc.
Sample mass: about 5 mg
Measurement temperature pattern: (1) Retention at 230°C for 5 minutes, (2) cooling at 10°C/min, and measurement of the temperature (Tc) at the top of the crystallization peak. (3) Retention at 30°C for 10 minutes, (4) heating at 10°C/min, and measurement of the temperature (Tm) at the top of the melting peak.

[Formation of polypropylene sheet]

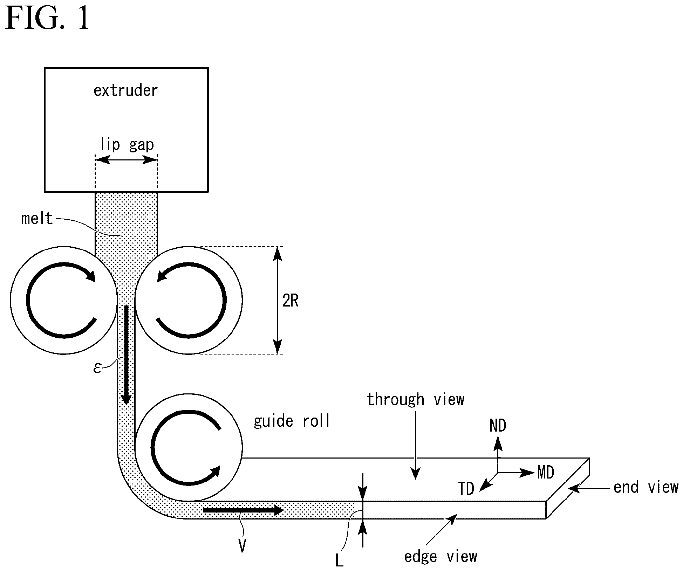

Using an opposed-roll-type sheet forming machine schematically shown in Fig. 1, the melt of the above-described resin composition S for press-rolling was press-rolled and elongated between a pair of metal pinch rolls to form a sheet having an average thickness of 169 $\mu$m. As to the processing conditions, the resin composition temperature (Te) of S just before press-rolling was 199°C, the pinch roll temperature (Tr) was 120°C, and the take-up speed (V) was 9 m/min.

The average elongational strain rate $\varepsilon$ in MD during forming was 33 s$^{-1}$.

Other processing conditions are shown in Table 1. "Pinch roll" in Table 1 refers to both rolls placed following the extruder shown in Fig. 1. "Lip gap (lip gap in Fig. 1)" in Table 1 means the width of the slit-shaped opening (slit width) of the die from which the molten resin composition is discharged. The "gelling agent" in Table 1 means a soluble nucleating agent.

A multipurpose test piece of type A2 specified in JIS K7139 was machined from a sheet having a thickness of 169 $\mu$m obtained by the forming, and the tensile modulus and the tensile strength were measured according to JIS K7161-2 under the conditions of a temperature of 23°C, a relative humidity of 50%, and a test speed of 1 mm/min using a precision universal testing machine (Autograph AG-X 10 kN) manufactured by Shimadzu Corporation.

[Example 2] and [Comparative Example 1]

The above-described resin composition S for press-rolling was used, and a sheet was formed and evaluated in the same manner as in Example 1 except that the processing conditions shown in Table 1 were employed.

In order to observe the three-dimensional crystal structure of the sheet formed, polarization microscopy observation and X-ray diffraction measurement were performed in seeing through directions in ND, TD, and MD of the sheet obtained (through, edge, and end views, respectively).

The polarization microscopy observation was performed with use of a sensitive color plate (scp) under the crossed-Nicols condition.

In the X-ray diffraction measurement, SAXS and WAXD were measured using X-rays (wavelength = 0.15 nm, beam diameter $=\varphi$ about 7 $\mu$m) of BL03XU of SPring-8 to obtain a two-dimensional pattern. PILATUS was used as a detector for SAXS, and measurement was performed with a camera length of about 3 m and an exposure time of 3 seconds. SOPHIAS was used as a detector for WAXD, and measurement was performed with a camera length of about 5 cm and an exposure time of 3 seconds.

[Evaluation of polypropylene sheet]

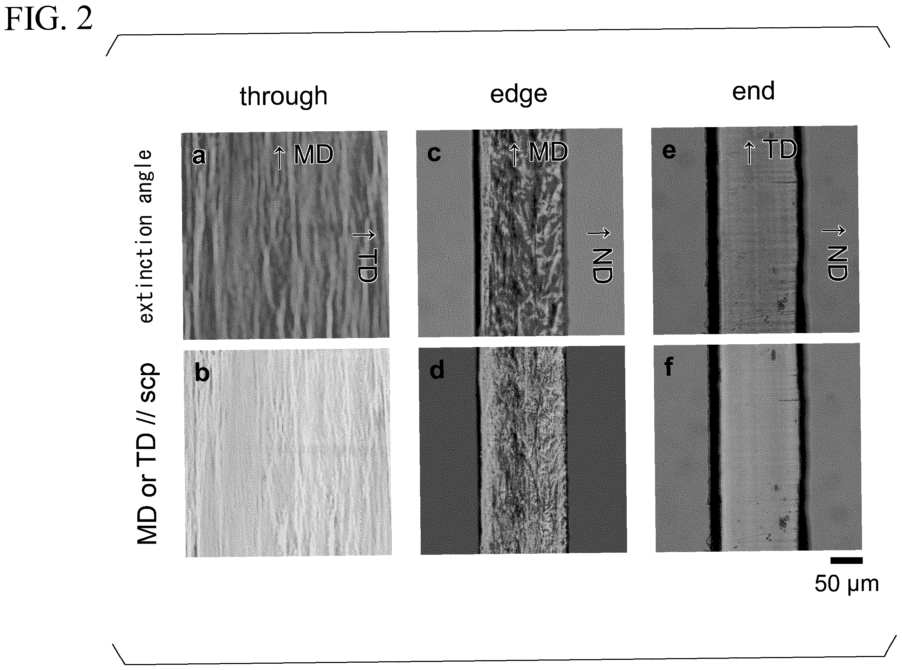

Spherulites were not observed at the resolution (about 1 $\mu$m) of the polarized micrographs of Example 2 shown in Fig. 2. In the extinction angle, the sheet was reddish purple in all observation directions, and optical isotropy was shown (a, c, e). On the other hand, when the sensitive color plate (scp) was placed in parallel with MD, the optical anisotropy was maximized in the through view (b), but a mottled pattern was observed as with the edge view (d). When the sensitive color plate was placed in parallel with TD, the isotropy was shown in the end view (f). Therefore, it was suggested that the c-axis is mainly oriented in the elongation direction (MD), and that isotropic crystals (nano crystals; NCs) constituting NOCs are present.

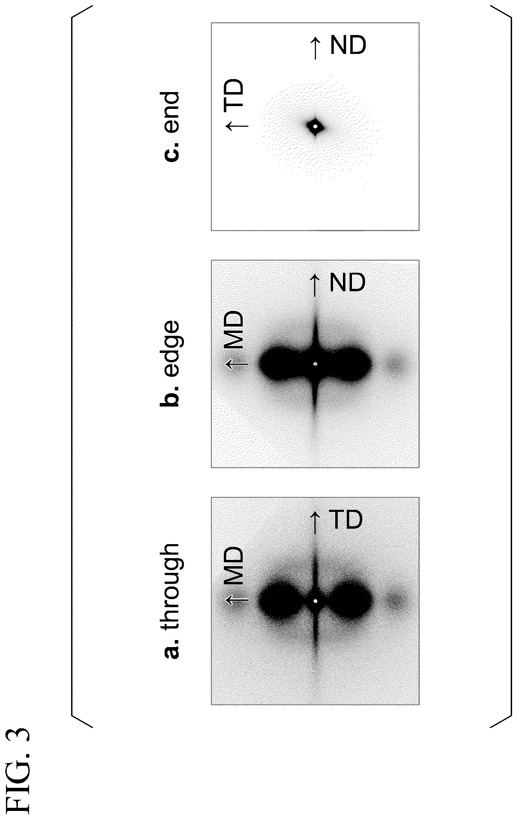

In the SAXS patterns of Example 2 shown in Fig. 3, primary and secondary two-point images in MD and a ring-shaped pattern were shown in the through view and the edge view (a, b), and central diffuse scattering was shown in the end view (c). Therefore, generation of NOCs (NCs arranged in MD are the main component, and NCs with isotropic orientation are present) was confirmed. From these measurement results, it was found that NOCs were generated at an average elongational strain rate $\varepsilon$ of 73 s$^{-1}$. Therefore, it was found that the critical elongational strain rate $\varepsilon^*$ in the production method of this Example was less than 73 s$^{-1}$. This value is significantly smaller than the conventional value of the critical elongational strain rate $\varepsilon^*$ (200 s$^{-1}$) (for example, described in the above-mentioned paper by Okada et al. (Non Patent Literature 1)). In addition, the average size of NCs calculated using the two-point images of SAXS according to the description of Non Patent Literature 1 was about 20 nm.

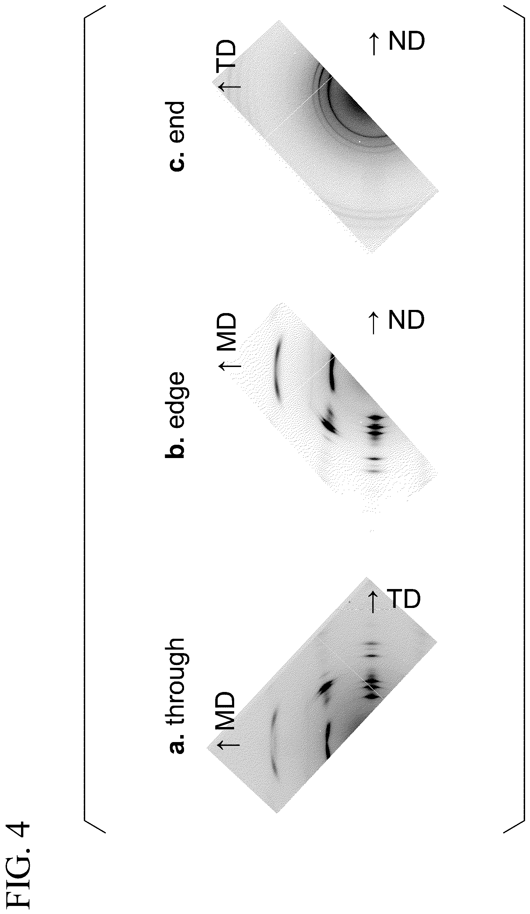

In the WAXD patterns of Example 2 shown in Fig. 4, the c-axis was highly oriented in MD in the through view and the edge view (a, b), and a ring-shaped pattern was shown in the end view (c). Thus, generation of NOCs (arranged in MD) was verified.

In addition, the tensile modulus and the tensile strength were as shown in Table 1.

From the above evaluation results, it was found that since the crystalline resin composition contains a soluble nucleating agent, NOCs can be generated and a polypropylene sheet having high mechanical strength can be produced even at a lower elongational strain rate than in the conventional cases, according to the production method of Example 2. In addition, it was found that although NOCs were contained even at an elongational strain rate of no more than 30 s$^{-1}$ since the SAXS pattern showed the two-point image oriented in MD also in Comparative Example 1 as described in Table 1, production at an elongational strain rate more than 30 s$^{-1}$ allows for generation of NOCs highly oriented in MD, and more complete NOCs can be attained including isotropic NCs three-dimensionally connected by the 3D network of the soluble nucleating agent, and therefore a polypropylene sheet having dramatically improved mechanical properties can be produced.

[Table 1]

| Name of composition | Unit | Example 1 | Example 2 | Comparative Example 1 |
|---|---|---|---|---|
| | | S | S | S |
| Crystalline resin | | iPP | iPP | iPP |
| Gelling agent | | NX8000 | NX8000 | NX8000 |
| Addition amount | mass% | 1.0 | 1.0 | 1.0 |

(continued)

| Name of composition | Unit | Example 1 | Example 2 | Comparative Example 1 |
|---|---|---|---|---|
| | | S | S | S |
| Processing conditions | | | | |
| Type of roller | | Metal roller | Metal roller | Metal roller |
| Lip gap | mm | 1.0 | 1.0 | 0.38 |
| Radius of each pinch roll (R) | mm | 125 | 125 | 125 |
| Average thickness of sheet after press-rolling (L) | μm | 169 | 134 | 403 |
| Take-up speed (V) | m/min | 9 | 18 | 10 |
| Average elongational strain rate ($\varepsilon$) | S$^{-1}$ | 33 | 73 | 23 |
| Temperature just before press-rolling (Te) | °C | 199 | 201 | 199 |
| Temperature of each pinch roll (Tr) | °C | 120 | 120 | 110 |
| Melting point measured by DSC (Tm) | °C | 163 | 163 | 163 |
| Crystallization temperature measured by DSC (Tc) | °C | 130 | 130 | 130 |
| Te - Tm | °C | 36 | 38 | 36 |
| Tc - Tr | °C | 10 | 10 | 20 |
| Physical properties | | | | |
| SAXS pattern | | Two-point image oriented in MD | Two-point image oriented in MD | Two-point image oriented in MD |
| Tensile modulus (MD) | MPa | 3550 | 3960 | 1940 |
| Tensile modulus (TD) | MPa | 2760 | 2580 | 1900 |
| Tensile strength (MD) | MPa | 74 | 95 | - |
| Tensile strength (TD) | MPa | 41 | 39 | - |

**Claims**

1. A method for producing a crystalline resin sheet, the method comprising: press-rolling a sheet-shaped molten crystalline resin composition by sandwiching the crystalline resin composition between a pair of pinch rolls, wherein

   the crystalline resin composition contains a crystalline resin and a soluble nucleating agent, and
   when a radius of the pair of pinch rolls is denoted by R, an average thickness of a sheet after press-rolling is denoted by L, and a sheet take-up speed in the pair of pinch rolls is denoted by V,
   an adjustment is performed so as to control an average elongational strain rate $\varepsilon$ (R, L, V) in a sheet elongation direction represented by formula (1) below to be more than 30 s$^{-1}$ but no more than 80 s$^{-1}$:
   [Mathematical formula 1]

$$\varepsilon(R,L,V) = \frac{V}{\sqrt{RL}} \qquad \texttt{... Formula (1)}$$

2. The method for producing a crystalline resin sheet according to claim 1, wherein the sheet-shaped molten crystalline resin composition is obtained by discharging the crystalline resin composition from a die having a slit-shaped opening.

3. The method for producing a crystalline resin sheet according to claim 1 or 2, wherein the sheet after press-rolling is peeled off from the pinch rolls, and a gas is injected toward a portion where the sheet after press-rolling is separated from the pinch rolls.

4. The method for producing a crystalline resin sheet according to claim 1, wherein a peripheral surface of at least one of the pair of pinch rolls is subjected to a mold-release treatment in advance.

5. The method for producing a crystalline resin sheet according to claim 1, wherein

when a temperature of the crystalline resin composition immediately before press-rolling is denoted by $T_e$, a temperature of the pair of pinch rolls is denoted by $T_r$, a crystallization temperature of the crystalline resin composition measured by DSC is denoted by $T_c$, and a melting point is denoted by $T_m$, a value range of $(T_e-T_m)$ is set to -15°C to 130°C and a value range of $(T_c-T_r)$ is set to -10°C to 130°C by adjustment of the temperature $T_e$ and the temperature $T_r$.

6. The method for producing a crystalline resin sheet according to claim 1, wherein

when a temperature of the crystalline resin composition immediately before press-rolling is denoted by $T_e$, a temperature of the pair of pinch rolls is denoted by $T_r$, a crystallization temperature of the crystalline resin composition measured by DSC is denoted by $T_c$, and a melting point is denoted by $T_m$, a value range of $(T_e-T_m)$ is set to 0°C to 90°C and a value range of $(T_c-T_r)$ is set to 0°C to 110°C by adjustment of the temperature $T_e$ and the temperature $T_r$.

FIG. 1

FIG. 2

50 µm

EP 4 541 556 A1

FIG. 3

FIG. 4

## INTERNATIONAL SEARCH REPORT

| International application No. |
| --- |
| **PCT/JP2023/022125** |

### A. CLASSIFICATION OF SUBJECT MATTER

**B29C 55/18**(2006.01)i; **C08J 5/18**(2006.01)i; **B29C 43/46**(2006.01)i; **B29C 43/52**(2006.01)i; **B29C 43/58**(2006.01)i; **B29C 48/305**(2019.01)i; **B29C 48/88**(2019.01)i; **B29C 48/92**(2019.01)i
FI:   B29C55/18; B29C43/46; B29C43/52; B29C43/58; B29C48/305; B29C48/88; B29C48/92; C08J5/18 CES

According to International Patent Classification (IPC) or to both national classification and IPC

### B. FIELDS SEARCHED

Minimum documentation searched (classification system followed by classification symbols)
B29C55/00-55/30; B29C43/00-43/58; B29C48/00-48/96; C08J5/18

Documentation searched other than minimum documentation to the extent that such documents are included in the fields searched
Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | WO 2010/084750 A1 (HIROSHIMA UNIVERSITY) 29 July 2010 (2010-07-29) paragraphs [0052], [0054], [0085], [0111]-[0114], fig. 1 | 1-6 |
| Y | WO 2022/102705 A1 (FP CORPORATION) 19 May 2022 (2022-05-19) paragraph [0026] | 1-6 |
| Y | WO 2010/084766 A1 (SUN ALLOMER LTD) 29 July 2010 (2010-07-29) paragraphs [0029]-[0030] | 3-4 |

☐ Further documents are listed in the continuation of Box C.    ☑ See patent family annex.

| | |
| --- | --- |
| *      Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **18 July 2023** | **01 August 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

<table>
<tr><td colspan="2"><strong>INTERNATIONAL SEARCH REPORT</strong><br>Information on patent family members</td><td>International application No.<br><strong>PCT/JP2023/022125</strong></td></tr>
</table>

| Patent document cited in search report | Publication date (day/month/year) | Patent family member(s) | Publication date (day/month/year) |
|---|---|---|---|
| WO 2010/084750 A1 | 29 July 2010 | US 2011/0300364 A1<br>paragraphs [0052], [0054], [0085], [0111]-[0114], fig. 1<br>EP 2390079 A1<br>paragraphs [0084], [0086], [0121], [0158]-[0160], fig. 1<br>KR 10-2011-0114616 A<br>CN 102292204 A | |
| WO 2022/102705 A1 | 19 May 2022 | (Family: none) | |
| WO 2010/084766 A1 | 29 July 2010 | US 2012/0018917 A1<br>paragraphs [0071]-[0074]<br>EP 2390080 A1<br>CN 102300696 A<br>KR 10-2011-0127157 A<br>JP 2010-168485 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022096354 A
- JP 5339350 B
- JP 5534458 B
- JP 5765707 B
- JP 5995201 B

**Non-patent literature cited in the description**

- **K. OKADA et al.** *Polym. J.*, 2010, vol. 42, 464-473
- **K. OKADA et al.** *Polym. J.*, 2018, vol. 50, 167-176